# EUROPEAN PATENT APPLICATION

(11) **EP 4 279 429 A1**
(43) Date of publication of application: **22.11.2023**
(21) Application number: 21919378.6
(22) Date of filing: 15.01.2021
(51) Int. Cl.: B65G 61/00

(54) **INFORMATION PROCESSING DEVICE**

(71) Applicant: Pioneer Corporation, Tokyo 113-0021 (JP)
(72) Inventor: OGIWARA, Shuji, Tokyo 113-0021 (JP); IWAHORI, Yasufumi, Tokyo 113-0021 (JP)
(74) Representative: Grünecker Patent- und Rechtsanwälte PartG mbB
(86) International application number: PCT/JP2021/001267
(87) International publication number: WO 2022/153485

(57) **Abstract**

A route in which a stop position of a delivery vehicle is taken into account is created. When creating a route, for each of one or more delivery destinations, a travel trajectory of a delivery person and a travel trajectory of a delivery vehicle in one or more deliveries made to the delivery destination is acquired, and, for each of the one or more delivery destinations, a transit point for the delivery destination is determined based on a travel trajectory of a delivery person and a travel trajectory of a delivery vehicle in each of one or more deliveries made to the delivery destination.

## Description

### Technical Field

The present invention relates to an information processing device.

### Background Art

Various methods have been proposed to create a route for traveling through to a plurality of delivery destinations. For example, Patent Document 1 discloses a collection and delivery route setting method for setting a collection and delivery route that is adapted also to time-specified deliveries.

### Prior Art Document

### Patent Document

Patent Document 1: JP 2005-280972A

### Summary of the Invention

### Problem to be Solved by the Invention

Depending on a delivery destination, a delivery vehicle cannot be stopped in front of the delivery destination and it is necessary to stop the delivery vehicle at a position distant from the delivery destination. In such cases, the delivery efficiency varies depending on where the delivery vehicle is stopped. The conventional method, however, merely sets the delivery destinations themselves as transit points and creates a route capable of efficiently traveling through these transit points, thus it does not create a route in which the stop position of the delivery vehicle is taken into account.

An example of a problem to be solved by the present invention is to create a route in which a stop position of a delivery vehicle is taken into account.

### Solution to the Problem

In order to solve the above problems, the invention according to one aspect is an information processing device configured to determine a transit point of a route for delivering a package to one or more delivery destinations, the information processing device including a travel trajectory acquisition section configured to acquire, for each of the one or more delivery destinations, a travel trajectory of a delivery person and a travel trajectory of a delivery vehicle in one or more deliveries made to the delivery destination by one or more delivery persons, and a transit point determination section configured to determine, for each of the one or more delivery destinations, a transit point for the delivery destination based on a travel trajectory of a delivery person and a travel trajectory of a delivery vehicle in each of one or more deliveries made to the delivery destination.

The invention according to another aspect is an information processing method executed by a computer for creating a transit point of a route for delivering a package to one or more delivery destinations, the method including a travel trajectory acquiring step of acquiring, for each of one or more delivery destinations, a travel trajectory of a delivery person and a travel trajectory of a delivery vehicle in one or more deliveries made to the delivery destination, and a transit point determining step of determining, for each of the one or more delivery destinations, a transit point for the delivery destination based on a travel trajectory of a delivery person and a travel trajectory of a delivery vehicle in each of one or more deliveries made to the delivery destination.

The invention according to yet another aspect is an information processing program that causes a computer to execute the information processing method described above.

The invention according to yet another aspect is a computer-readable storage medium having stored therein the information processing program described above.

### Brief Description of the Drawings

FIG. 1 is a diagram showing an information processing device 100 according to one exemplary embodiment of the present invention;
FIG. 2A to FIG. 2C are diagrams for explaining a travel trajectory of a delivery person and a travel trajectory of a delivery vehicle;
FIG. 3 is a diagram showing one example of a processing operation in an information processing device 100 according to one exemplary embodiment of the present invention;
FIG. 4 is a diagram for explaining a route created by a route creation section 140; and
FIG. 5 is a diagram for explaining a route created by the route creation section 140.

### Description of Embodiments

An information processing device according to one embodiment of the present invention is an information processing device configured to determine a transit point of a route for delivering a package to one or more delivery destinations, the information processing device including a travel trajectory acquisition section configured to acquire, for each of the one or more delivery destinations, a travel trajectory of a delivery person and a travel trajectory of a delivery vehicle in one or more deliveries made to the delivery destination by one or more delivery persons, and a transit point determination section configured to determine, for each of the one or more delivery destinations, a transit point for the delivery destination based on a travel trajectory of a delivery person and a travel trajectory of a delivery vehicle in each of one or more deliveries made to the delivery destination. Thus, in this embodiment, the transit point of the route is determined based on the travel trajectory of the delivery person and the travel trajectory of the delivery vehicle so it is possible to determine the transit point which is based on the stop position of the delivery vehicle. As a result, in this embodiment, it is possible to create a route in which the stop position of the delivery vehicle is taken into account.

The information processing device may further include a stop position derivation section configured to derive, for each of the one or more delivery destinations, a stop position of a delivery vehicle in each of one or more deliveries based on a difference between a travel trajectory of a delivery person and a travel trajectory of a delivery vehicle in the each of the one or more deliveries made to the delivery destination, and a travel time derivation section configured to derive, for each of the one or more delivery destinations, walking time of a delivery person in each of one or more deliveries based on a difference between a travel trajectory of a delivery person and a travel trajectory of a delivery vehicle in the each of the one or more deliveries made to the delivery destination. The transit point determination section may be configured to determine, for each of the one or more delivery destinations, a stop position for a delivery in which the walking time is shortest among one or more deliveries made to the delivery destination, as a transit point for the delivery destination. In this way, it is possible to create a route such that time that the delivery person travels on foot becomes shortest.

The information processing device may further include a weather information acquisition section configured to acquire weather when delivering to the one or more delivery destinations, and the travel trajectory acquisition section may be configured to acquire, for each of the one or more delivery destinations, a travel trajectory of a delivery person and a travel trajectory of a delivery vehicle in one or more deliveries made to the delivery destination in the weather acquired by the weather information acquisition section. In this way, it is possible to create a route in conformity with the weather of that day.

The information processing device may further include a day-of-week information acquisition section configured to acquire a day of week when delivering to the one or more delivery destinations, and the travel trajectory acquisition section may be configured to acquire, for each of the one or more delivery destinations, a travel trajectory of a delivery person and a travel trajectory of a delivery vehicle in one or more deliveries made to the delivery destination on the day of week acquired by the day-of-week information acquisition section. In this way, it is possible to create an efficient route in which changes in road conditions depending on the day of the week are taken into account.

The information processing device may further include a time-of-day information acquisition section configured to acquire time of day when delivering to the one or more delivery destinations, and the travel trajectory acquisition section may be configured to acquire, for each of the one or more delivery destinations, a travel trajectory of a delivery person and a travel trajectory of a delivery vehicle in one or more deliveries made to the delivery destination during the time of day acquired by the time-of-day information acquisition section. In this way, it is possible to create an efficient route in which changes in road conditions depending on the time of day are taken into account.

Further, the information processing method according to one embodiment of the present invention is an information processing method executed by a computer for creating a transit point of a route for delivering a package to one or more delivery destinations, the method including a travel trajectory acquiring step of acquiring, for each of one or more delivery destinations, a travel trajectory of a delivery person and a travel trajectory of a delivery vehicle in one or more deliveries made to the delivery destination, and a transit point determining step of determining, for each of the one or more delivery destinations, a transit point for the delivery destination based on a travel trajectory of a delivery person and a travel trajectory of a delivery vehicle in each of one or more deliveries made to the delivery destination. Thus, in this embodiment, the transit point of the route is determined based on the travel trajectory of the delivery person and the travel trajectory of the delivery vehicle so it is possible to determine the transit point which is based on the stop position of the delivery vehicle. As a result, in this embodiment, it is possible to create a route in which the stop position of the delivery vehicle is taken into account.

Further, an information processing program according to one embodiment of the present invention causes a computer to execute the above-described information processing method. Thus, in this embodiment, it is possible to create by using a computer a route in which the stop position of the delivery vehicle is taken into account.

Further, one embodiment of the present invention provides a computer-readable storage medium having stored therein the above-described information processing program. Thus, in this embodiment, the above-described information processing program can be distributed independently not only it can be incorporated it into a device, thus version updating or the like can be easily performed.

### EXAMPLE

### <Information processing device 100>

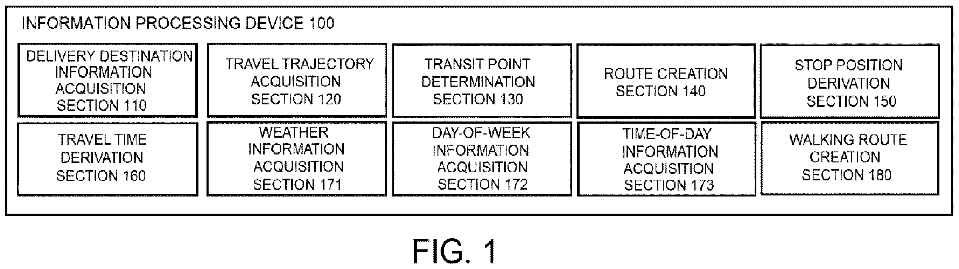

FIG. 1 is a diagram showing an information processing device 100 according to one exemplary embodiment of the present invention. The information processing device 100 is constituted of a computer and includes a delivery destination information acquisition section 110, a travel trajectory acquisition section 120, a transit point determination section 130 and a route creation section 140.

The delivery destination information acquisition section 110 acquires delivery destination information. The delivery destination information is information about a delivery destination to be traveled through and includes information that identifies a customer in the delivery destination (e.g., customer name or customer ID) and information such as address and location of the delivery destination. For example, the delivery destination information acquisition section 110 may acquire the delivery destination information by receiving it from an external device, or may acquire the delivery destination information by receiving an input from a user, or the information processing device 100 may include a storage device having stored therein the delivery destination information and the delivery destination information acquisition section 110 may acquire the delivery destination information from this storage device.

For each of the delivery destinations included in the delivery destination information acquired by the delivery destination information acquisition section 110, the travel trajectory acquisition section 120 acquires a travel trajectory of a delivery person and a travel trajectory of a delivery vehicle in one or more deliveries made to the delivery destination by one or more delivery persons. In other words, the travel trajectory acquisition section 120 acquires the travel trajectories of the delivery person and the delivery vehicle in the delivery made to each of the delivery destinations in the past. The travel trajectory of a delivery person is a trajectory traveled by the delivery person during the delivery and is information indicating a position of the delivery person at each time point during the delivery. The travel trajectory of a delivery vehicle is a trajectory traveled by the delivery vehicle during the delivery and is information indicating a position of the delivery vehicle at each time point during the delivery.

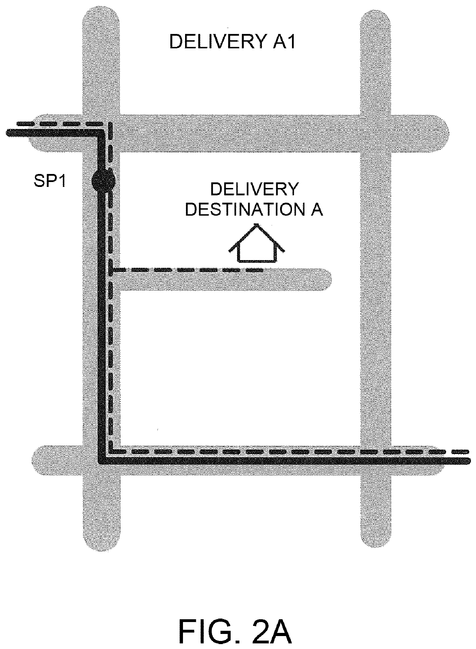

When the delivery person leaves the delivery vehicle and travels on foot, a difference occurs between the travel trajectory of the delivery person and the travel trajectory of the delivery vehicle. Thus, a stop position of the delivery vehicle can be acquired based on the travel trajectory of the delivery person and the travel trajectory of the delivery vehicle. FIG. 2A to FIG. 2C are diagrams for explaining a travel trajectory of a delivery person and a travel trajectory of a delivery vehicle. FIG. 2A shows the travel trajectory of the delivery person (dashed line) and the travel trajectory of the delivery vehicle (solid line) in a delivery A1 made to a delivery destination A. In the delivery A1, when the delivery person stops the delivery vehicle at a position SP1 and the delivery person travels on foot between this stop position and the delivery destination A, a difference occurs between the travel trajectory of the delivery person (dashed line) and the travel trajectory of the delivery vehicle (solid line) between the position SP1 and the delivery destination A.

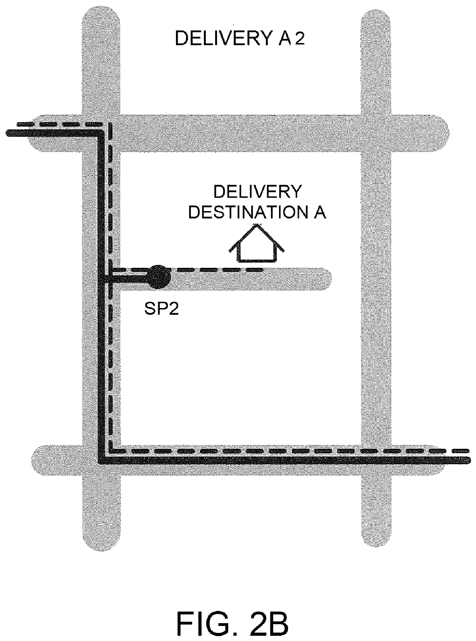

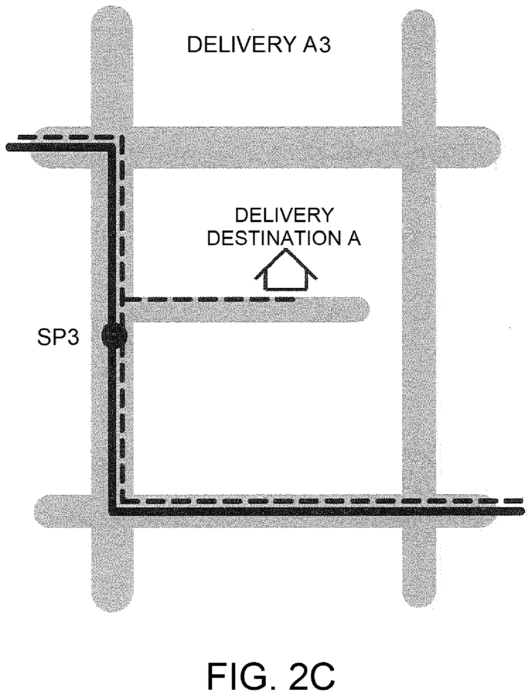

For the delivery destination to which deliveries have been made two times or more in the past, the stop position of the delivery vehicle may differ for each delivery. Further, for the delivery destination to which deliveries have been made by two or more delivery persons in the past, the stop position may differ for each delivery person. For example, FIG. 2B and FIG. 2C show the travel trajectory of the delivery person (dashed line) and the travel trajectory of the delivery vehicle (solid line) in deliveries A2, A3 made to the destination A. In the delivery A2 (A3), in the case where the delivery person stopped the delivery vehicle at a position SP2 (SP3) different from the position SP1, a difference occurs between the travel trajectory of the delivery person DP (dashed line) and the travel trajectory of the delivery vehicle DC (solid line) in a section (between the position SP2 (SP3) and the delivery destination A) different from the delivery A1.

The travel trajectory of the delivery person is collected, for example, from a terminal with a GPS such as a smartphone carried by the delivery person and is stored in a storage device. In addition, the travel trajectory of the delivery vehicle is collected from a terminal with a GPS such as a navigation system installed in the delivery vehicle and is stored in the storage device. The travel trajectories of the delivery person and the delivery vehicle may be accumulated by adding information such as the weather, the day of the week and the time of day when the delivery is made. The travel trajectory acquisition section 120 acquires the travel trajectory of the delivery person and the travel trajectory of the delivery vehicle from the storage device. The storage device may be provided at the information processing device 100, or it may be provided at a device separate from the information processing device 100.

The transit point determination section 130 determines, for each delivery destination, a transit point for this delivery destination based on the travel trajectory of the delivery person and the travel trajectory of the delivery vehicle in each of one or more deliveries made to this delivery destination. For example, as described in detail below, the transit point determination section 130 derives, for each delivery destination, an optimal stop position among the stop positions of the delivery vehicle in the deliveries made to this delivery destination in the past, and determines this optimum stop position as the transit point for this delivery destination. With respect to the delivery destination for which the travel trajectory of the delivery person and the travel trajectory of the delivery vehicle could not be acquired, the transit point determination section 130 determines e.g., the delivery destination itself as the transit point.

The route creation section 140 creates a route for traveling through the transit points determined by the transit point determination section 130. A route creating method used by the route creation section 140 may be any method as long as it can create an efficient route for traveling through a plurality of transit points.

Thus, in this exemplary embodiment, the transit point of the route is determined based on the travel trajectory of the delivery person and the travel trajectory of the delivery vehicle so it is possible to determine the transit point that is based on the stop position of the delivery vehicle. As a result, in this embodiment, it is possible to create a route in which the stop position of the delivery vehicle is taken into account.

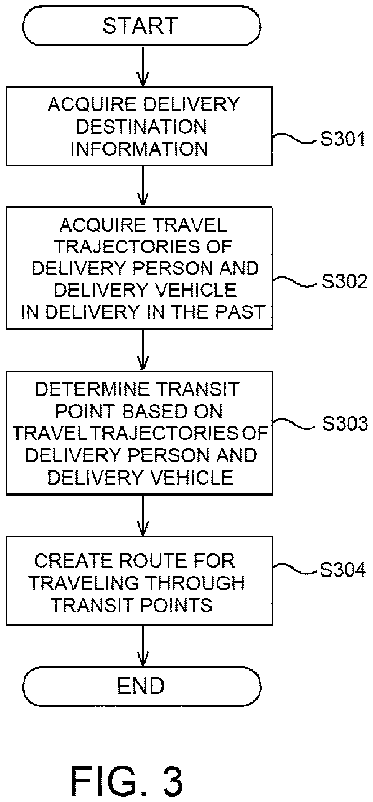

FIG. 3 is a diagram showing one example of a processing operation in an information processing device 100 according to one exemplary embodiment of the present invention. The delivery destination information acquisition section 110 acquires delivery destination information (step S301). The travel trajectory acquisition section 120 acquires, for each delivery destination included in the delivery destination information, the travel trajectories of the delivery person and the delivery vehicle in the delivery made to this delivery destination in the past (step S302). The transit point determination section 130 determines, for each delivery destination, the transit point for making delivery to this delivery destination based on the acquired travel trajectories of the delivery person and the delivery vehicle (step S303). The route creation section 140 creates a route for traveling through the determined transit points (step S304).

### <Determination of transit point based on walking time>

Various methods are conceivable as a method of determining the transit point based on the travel trajectory of the delivery person and the travel trajectory of the delivery vehicle. For example, it is possible to reduce the burden on the delivery person and increase the delivery efficiency by shortening the time the delivery person travels on foot. Thus, for example, it may be preferable to determine the transit point which is the stop position of the delivery vehicle such that the walking time of the delivery person becomes shortest.

Thus, the information processing device 100 may include a stop position derivation section 150 that is configured to derive, for each delivery destination, the stop position of the delivery vehicle in each of one or more deliveries based on a difference between the travel trajectory of the delivery person and the travel trajectory of the delivery vehicle in the each of the one or more deliveries made to the delivery destination. In addition, the information processing device 100 may include a travel time derivation section 160 that is configured to derive, for each delivery destination, the walking time of the delivery person in each of one or more deliveries based on a difference between the travel trajectory of the delivery person and the travel trajectory of the delivery vehicle in the each of the one or more deliveries made to the delivery destination. In this way, it is possible to obtain the walking time of the delivery person in one or more deliveries made to each delivery destination in the past. The walking time of the delivery person may be a time period during which a difference between the travel trajectory of the delivery person and the travel trajectory of the delivery vehicle is occurring, or may be a time period taken to travel from the stop position of the delivery vehicle to the delivery destination.

The transit point determination section 130 may determine, for each delivery destination, the stop position for a delivery in which the walking time is the shortest among one or more deliveries made to this delivery destination, as the transit point for this delivery destination. In this way, it is possible to create a route in which the time the delivery person travels on foot is the shortest.

For example, in the example shown in FIG. 2Ato FIG. 2C, for the respective deliveries A1 to A3, the stop position derivation section 150 derives, as the stop positions of the delivery vehicle for the deliveries A1 to A3, positions SP1 to SP3 where a difference starts to occur between the travel trajectory of the delivery person DP (dashed line) and the travel trajectory of the delivery vehicle DC (solid line).

Further, in the example shown in FIG. 2Ato FIG. 2C, the travel time derivation section 160 derives, as the walking time of the delivery person, the time during which a difference is occurring between the travel trajectory of the delivery person DP (dashed line) and the travel trajectory of the delivery vehicle DC (solid line). That is, the travel time derivation section 160 derives, as the walking time of the delivery person in the delivery A1, travel time WT1 of the delivery person from when the delivery person travels from the stop position SP1 to the delivery destination A and returns to the stop position SP1, and the travel time derivation section 160 derives, as the walking time of the delivery person in the delivery A2, travel time WT2 of the delivery person from when the delivery person travels from the stop position SP2 to the delivery destination A and returns to the stop position SP2, and the travel time derivation section 160 derives, as the walking time of the delivery person in the delivery A3, travel time WT3 of the delivery person from when the delivery person travels from the stop position SP3 to the delivery destination A and returns to the stop position SP3.

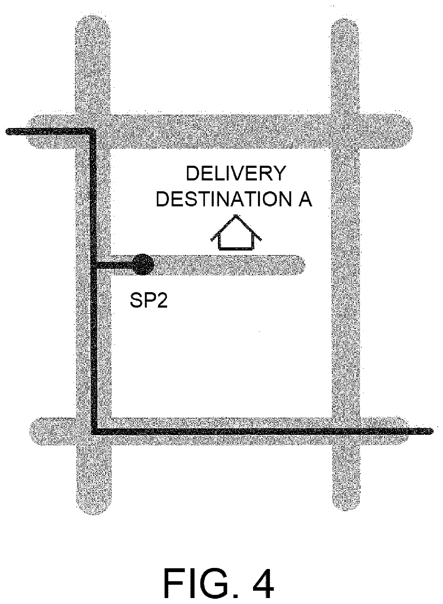

Then, in the example shown in FIG. 2Ato FIG. 2C, when the travel time WT2 is the shortest among the travel times WT1 to WT3, the transit point determination section 130 determines, as the transit point for the delivery destination A, the position SP2 which is the stop position of the delivery vehicle in the delivery A2 in which the walking time is the shortest among the deliveries A1 to A3. As a result, in the example shown in FIG. 2Ato FIG. 2C, the route creation section 140 creates a route having the position SP2 as the transit point for the delivery destination A, as shown in FIG. 4.

### <Acquisition of travel trajectory>

The delivery person may change the stop position depending on the weather. For example, when the weather is rainy, it may be preferable to stop the delivery vehicle as close as possible to the delivery destination to prevent a package from getting wet even if the efficiency is decreased.

Thus, the information processing device 100 may further include a weather information acquisition section 171 configured to acquire information about weather at the time of delivery to the delivery destination, and the travel trajectory acquisition section 120 may acquire, for each delivery destination, the travel trajectory of the delivery person and the travel trajectory of the delivery vehicle in one or more deliveries made to this delivery destination in the weather indicated in the information acquired by the weather information acquisition section 171. In this way, it is possible to create a route in conformity with the weather of that day.

Road conditions such as traffic congestion may vary depending on the day of the week, and the stop position of the delivery vehicle for the efficient delivery may vary depending on the day of the week.

Accordingly, the information processing device 100 may further include a day-of-week information acquisition section 172 configured to acquire information about the day of the week on which a package is delivered to the delivery destination, and the travel trajectory acquisition section 120 may acquire, for each delivery destination, the travel trajectory of the delivery person and the travel trajectory of the delivery vehicle in one or more deliveries made to the delivery destination on the day of the week indicated in the information acquired by the day-of-week information acquisition section 172. In this way, it is possible to create an efficient route in which changes in the road conditions depending on the day of the week are taken into account.

Road conditions such as traffic congestion may vary depending on time of day, and the stop position of the delivery vehicle for the efficient delivery may vary depending on time of day.

Thus, the information processing device 100 may further include a time-of-day information acquisition section 173 configured to acquire information about time of day in which delivery is made to the delivery destination, and the travel trajectory acquisition section 120 may acquire, for each delivery destination, the travel trajectory of the delivery person and the travel trajectory of the delivery vehicle in one or more deliveries made to the delivery destination in the time of day acquired by the time-of-day information acquisition section 173. In this way, it is possible to create an efficient route in which changes in road conditions depending on the time of day are taken into account.

### <Walking route creation section 180>

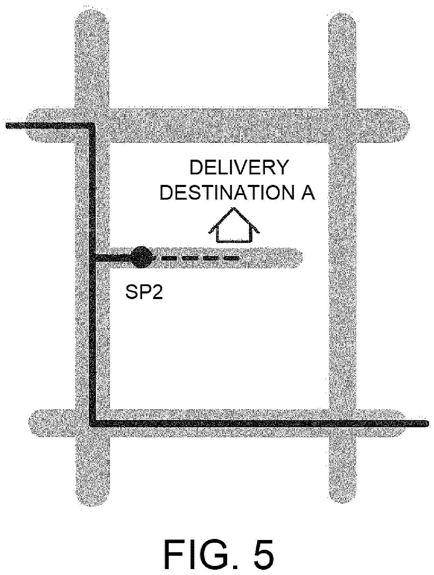

The information processing device 100 may include a walking route creation section 180 configured to create, for each delivery destination, a walking route from the transit point for the delivery destination to the delivery destination. In this way, it is possible to indicate the walking route to the delivery person so the delivery efficiency can be improved even more. For example, in the example shown in FIG. 4 described above, it is possible to indicate the walking route on which the delivery person travels on foot (dashed line) in addition to the route through which the delivery vehicle travels (solid line), as shown in FIG. 5.

### <Determination of transit point based on travel time of delivery vehicle>

As an example of determining the transit point for the delivery destination for which the travel trajectory of the delivery person and the travel trajectory of the delivery vehicle cannot be acquired, the example that determines the delivery destination itself as the transit point was shown. However, with respect to the delivery destination for which the travel trajectory of the delivery person and the travel trajectory of the delivery vehicle cannot be acquired but the travel trajectory of the delivery vehicle and the stop position of the delivery vehicle in the delivery made in the past can be acquired, the transit point determination section 130 may determine the transit point based on the travel trajectory of the delivery vehicle and the stop position of the delivery vehicle in the delivery made in the past.

Specifically, in a storage device, road links and road nodes on which the delivery vehicle had traveled, and the time when it passed through respective road nodes, are stored as the travel trajectory of the delivery vehicle in the delivery made to each delivery destination in the past. Then, when making a new delivery, in the case where a corresponding road, which is a road corresponding to the delivery destination (for example, a road adjacent to the delivery destination and accessible to the delivery destination, e.g., the road on which SP2 exists in the example shown in FIG. 2B), is a dead-end road extending from a T-shaped junction as shown in FIG. 2A to FIG. 2C, the transit point determination section 130 identifies two road links connected to the road link corresponding to said corresponding road (in the example shown in FIG. 2A to FIG. 2C, the road link corresponding to the road on which SP1 exists and the road link corresponding to the road on which SP3 exists), and, for each of the two road links that are identified, identifies the road nodes, among the road nodes at both ends of each road link, that are not connected to the road link corresponding to the corresponding road. As a result, two road nodes are identified. Thereafter, for each delivery made to this delivery destination in the past, the transit point determination section 130 calculates the travel time of the delivery vehicle that it takes to travel between the identified two road nodes based on the travel trajectory of the delivery vehicle, and determines, as the transit point for this delivery destination, the stop position of the delivery vehicle in the delivery in which the calculated travel time is the shortest among the deliveries made in the past.

In the case where other road links are connected to both ends of the road link corresponding to the corresponding road (i.e., when the corresponding road is not a dead-end road), the transit point determination section 130 calculates, for each delivery made to the delivery destination in the past, the travel time of the delivery vehicle that it takes to travel between the road nodes located on the both ends of the road link corresponding to the corresponding road based on the travel trajectory of the delivery vehicle, and determines, as the transit point for this delivery destination, the stop position of the delivery vehicle in the delivery in which the calculated travel time is the shortest among the deliveries made in the past.

The stop position where the travel time is the shortest is presumed to be the efficient stop position. Thus, the efficient route can be created by using that stop position as the transit point.

The present invention has been described herein by way of preferred embodiments of the present invention. Although the present invention has been described with reference to specific embodiments, various modifications and changes to these embodiments are possible without departing from the spirit and scope of the present invention as set forth in the claims.

### List of Reference Signs

- 100: information processing device
- 110: delivery destination information acquisition section
- 120: travel trajectory acquisition section
- 130: transit point determination section
- 140: route creation section
- 150: stop position derivation section
- 160: travel time derivation section
- 171: weather information acquisition section
- 172: day-of-week information acquisition section
- 173: time-of-day information acquisition section
- 180: walking route creation section

## Claims

1. An information processing device configured to determine a transit point of a route for delivering a package to one or more delivery destinations, the information processing device comprising:
a travel trajectory acquisition section configured to acquire, for each of the one or more delivery destinations, a travel trajectory of a delivery person and a travel trajectory of a delivery vehicle in one or more deliveries made to the delivery destination by one or more delivery persons; and
a transit point determination section configured to determine, for each of the one or more delivery destinations, a transit point for the delivery destination based on a travel trajectory of a delivery person and a travel trajectory of a delivery vehicle in each of one or more deliveries made to the delivery destination.

2. The information processing device according to claim 1, further comprising:
a stop position derivation section configured to derive, for each of the one or more delivery destinations, a stop position of a delivery vehicle in each of one or more deliveries based on a difference between a travel trajectory of a delivery person and a travel trajectory of a delivery vehicle in the each of the one or more deliveries made to the delivery destination; and
a travel time derivation section configured to derive, for each of the one or more delivery destinations, walking time of a delivery person in each of one or more deliveries based on a difference between a travel trajectory of a delivery person and a travel trajectory of a delivery vehicle in the each of the one or more deliveries made to the delivery destination, wherein
the transit point determination section is configured to determine, for each of the one or more delivery destinations, a stop position in a delivery in which the walking time is shortest among one or more deliveries made to the delivery destination, as a transit point for the delivery destination.

3. The information processing device according to claim 1 or 2, further comprising
a weather information acquisition section configured to acquire weather when delivering to the one or more delivery destinations, wherein
the travel trajectory acquisition section is configured to acquire, for each of the one or more delivery destinations, a travel trajectory of a delivery person and a travel trajectory of a delivery vehicle in one or more deliveries made to the delivery destination in the weather acquired by the weather information acquisition section.

4. The information processing device according to any one of claims 1 to 3, further comprising
a day-of-week information acquisition section configured to acquire a day of week when delivering to the one or more delivery destinations, wherein
the travel trajectory acquisition section is configured to acquire, for each of the one or more delivery destinations, a travel trajectory of a delivery person and a travel trajectory of a delivery vehicle in one or more deliveries made to the delivery destination on the day of week acquired by the day-of-week information acquisition section.

5. The information processing device according to any one of claims 1 to 4, further comprising
a time-of-day information acquisition section configured to acquire time of day when delivering to the one or more delivery destinations, wherein
the travel trajectory acquisition section is configured to acquire, for each of the one or more delivery destinations, a travel trajectory of a delivery person and a travel trajectory of a delivery vehicle in one or more deliveries made to the delivery destination during the time of day acquired by the time-of-day information acquisition section.

6. An information processing method executed by a computer for creating a transit point of a route for delivering a package to one or more delivery destinations, the method comprising:
a travel trajectory acquiring step of acquiring, for each of one or more delivery destinations, a travel trajectory of a delivery person and a travel trajectory of a delivery vehicle in one or more deliveries made to the delivery destination; and
a transit point determining step of determining, for each of the one or more delivery destinations, a transit point for the delivery destination based on a travel trajectory of a delivery person and a travel trajectory of a delivery vehicle in each of one or more deliveries made to the delivery destination.

7. An information processing program that causes a computer to execute the information processing method according to claim 6.

8. A computer-readable storage medium having stored therein the information processing program according to claim 7.
